# EUROPEAN PATENT SPECIFICATION

(11) **EP 4 126 637 B1**
(45) Date of publication and mention of the grant of the patent: **24.09.2025**
(21) Application number: 21714711.5
(22) Date of filing: 25.03.2021
(51) Int. Cl.: B62D 1/187, B62D 1/184

(54) **A DRIVER'S CABIN OF A VEHICLE**
FAHRERKABINE EINES FAHRZEUGS
CABINE DE CONDUCTEUR D'UN VÉHICULE

(30) Priority: 26.03.2020 NL 2025212
(43) Date of publication of application: 08.02.2023
(73) Proprietor: DAF Trucks N.V., 5643 TW Eindhoven (NL)
(72) Inventor: ROIJACKERS, Arnoldus Johannes Ignatius Maria, 5643 TW Eindhoven (NL); KUIJPERS, Martinus Wilhelmina Paulus, 5643 TW Eindhoven (NL)
(74) Representative: V.O.
(86) International application number: PCT/NL2021/050196
(87) International publication number: WO 2021/194340

(56) References cited:
- EP-A1- 0 671 308
- GB-A- 2 107 439
- GB-B- 2 381 853
- JP-U- S55 101 656

## Description

The invention relates to a driver's cabin of a vehicle, in particular a heavy goods vehicle, the driver's cabin comprising a cabin frame, a steering column for a steering wheel and a steering wheel connection assembly connecting the steering wheel to the cabin frame, wherein the steering wheel connection assembly comprises a first guide plate rigidly connected to the cabin frame, the first guide plate having a curved vertical guide slot for vertical steering column adjustment.

From GB-B-2381853 an adjusting device for a steering wheel of an industrial truck is known comprising a first guide plate having a curved vertical guide slot for vertical steering column adjustment such that vertical adjustment of the steering wheel provide positive, i.e. automatic adjustment of the inclination of the steering column, such that the angle of the steering wheel is adjusted simultaneously with moving the steering wheel upwards. The adjusting device according to GB-B-2381853 further comprises an intermediate plate and a horizontal guide plate having a linear horizontal guide slot for horizontal steering wheel adjustment. Rollers are rotatably fixed to the intermediate plate and engage the linear horizontal guide slot. This known adjusting device has the effect that the inclination of the steering wheel is changed positively during a vertical adjustment, and free adjustment of the inclination of the steering wheel, independently of the vertical position, is not possible. However, since drivers of vehicles have a large variety of body sizes and driver preferences, there is a desire in the field for an adjusting device which meets the demands of drivers who e.g. use a forward steering wheel position and like to have a more horizontal steering wheel angle as well as drivers who use a rearward steering wheel position and like to have a more vertical steering wheel angle. Furthermore, for proper direct vision on the road, a driver's position in such vehicles is most forward in the cabin, especially in vehicles, such as cab-over-engine vehicles or heavy goods vehicles. In such vehicles the design of the cabin has only a limited space for an adjustable steering column which meets all the demands of drivers. For example, the space in front of the cabin is used for e.g. the vehicle's grille, the cabin firewall, heater air tubes, electric wiring, dashboard frame, space for safe crash performance, instrument panel, pedal box etc. such that knee space for the driver required for the driver to step inand out of the cabin in a safe way, leaving very limited space for an adjustable steering column. In addition, the steering column must be able to provide direct vision lines of the driver through the steering wheel on the instrument panel.

Furthermore, EP-A1-0671308 discloses the following features of the independent claim: a steering wheel connection assembly which comprises:
- a first guide plate rigidly connected to a cabin frame, the first guide plate having a guide slot for steering column adjustment; wherein the first guide plate further has a linear guide slot positioned beneath the guide slot and wherein the steering wheel connection assembly further comprises:
   - a second guide plate, the steering column being rigidly connected to the second guide plate, the second guide plate comprising a cam that engages in the guide slot, the second guide plate having a curved angular guide slot for angular steering column adjustment.

There thus is a desire in the field for a compact steering wheel connection assembly which provides an adjustment of the steering column, over a sufficient vertical range as well as a sufficient angle of inclination of the steering wheel mounted thereon.

According to the invention this desire in the field is met by providing a driver's cabin of a vehicle, in particular a heavy goods vehicle, the driver's cabin comprising a cabin frame, a steering column for a steering wheel and a steering wheel connection assembly connecting the steering wheel to the cabin frame, wherein the steering wheel connection assembly comprises:
- a first guide plate rigidly connected to the cabin frame, the first guide plate having a curved vertical guide slot for vertical steering column adjustment; characterized in that the first guide plate further has a linear guide slot positioned beneath the curved vertical guide slot and in that the steering wheel connection assembly further comprises:
   - a second guide plate, the steering column being rigidly connected to the second guide plate, the second guide plate comprising a cam that engages in the curved vertical guide slot, the second guide plate having a curved angular guide slot for angular steering column adjustment;
   - a second guide plate holding lever system, said second guide plate holding lever system having a first end rotationally connected to the cabin frame or the first guide plate, and a second free end having a pin, the pin engaging in both the linear guide slot and the curved angular guide slot. By providing the second guide plate with a curved angular guide slot for angular steering column adjustment not only free adjustment of the angular adjustment of the steering column, independently of the vertical position, is possible (meaning that inclination of the steering wheel is adjustable independently of its vertical position) but also a large range of the adjustment of the inclination of the steering wheel is possible by means of a relatively compact steering wheel connection assembly.

In an embodiment of a driver's cabin of a vehicle according to the invention the curved vertical guide slot for vertical steering column adjustment has a radius of curvature of between 23 cm and 24 cm and a length of between 14.5 cm and 14.8 cm. It is in particular advantageous when with respect to the horizontal the curved vertical guide slot for vertical steering column adjustment extends between 17 degrees and 51 degrees. By such a radius of curvature and inclination, a vertical adjustment range and range of inclination of the steering wheel can be realized for a large number of situations, i.e. for a large range of driver body dimensions.

In a still further embodiment of a driver's cabin of a vehicle according to the invention the curved angular guide slot for angular steering column adjustment has a radius of curvature of between 13.6 cm and 13.8 cm and a length of between 9.2 cm and 9.4 cm. In particular, when with respect to the axis S of the steering column the curved angular guide slot for angular steering column adjustment extends between 29 degrees and 11 degrees a relatively large range of inclination of the steering wheel can be realized for a large number of situations, in dependence of the driver preferences, independent on the vertical adjustment of the steering column.

In an embodiment of a driver's cabin of a vehicle according to the invention in which all the above features are present the steering wheel connection assembly can provide an angular adjustment angle of the steering column between 8 degrees and 55.5 degrees, which in practice appears to be sufficient in practical all situations.

In a driver's cabin of a vehicle according to the invention the first end of the second guide plate holding lever system is mounted in a displaceable manner in a curved slot. Such a curved slot allows for movement of the second guide plate holding lever system which can be formed as a rod.

The invention will be further explained with reference to the Figures, in which a non-limiting exemplary embodiment of according to the invention is shown:
Fig. 1 schematically shows an embodiment in side view of a driver's cabin of a vehicle according to the invention;
Fig. 2 schematically shows a steering column for a steering wheel and a steering wheel connection assembly connecting the steering wheel to a cabin frame of the driver's cabin as shown in Figure 1 in side view;
Fig. 3 schematically shows a first guide plate rigidly connected to the cabin frame of the steering wheel connection assembly as shown in Figure 2; and
Fig. 4 schematically shows a second guide plate to which the steering column is rigidly connected of the steering wheel connection assembly as shown in Figure 2 shown in an opposite side view with regard to Figure 2.

### DETAILED DESCRIPTION OF THE PREFERRED EMBODIMENTS

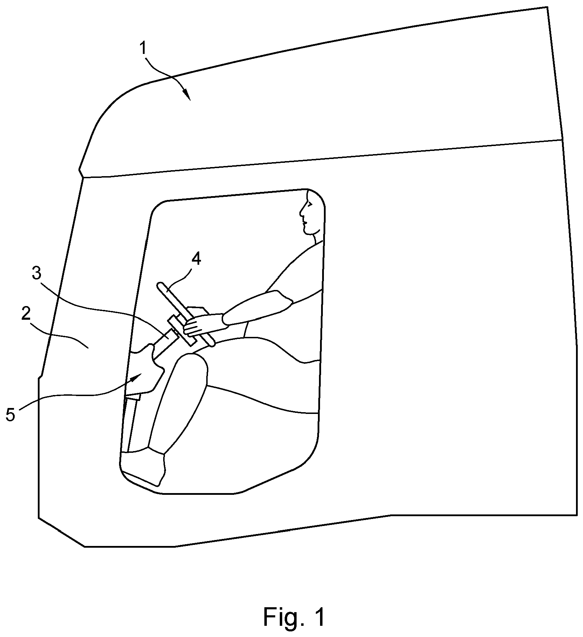

In Fig. 1 an example of an embodiment of a driver's cabin 1 of a heavy goods vehicle according to the invention is shown in side view. The driver's cabin 1 comprises a cabin frame 2, a steering column 3 for a steering wheel 4 having a steering column axis S. A steering wheel connection assembly 5 connects the steering wheel 4 to the cabin frame 2.

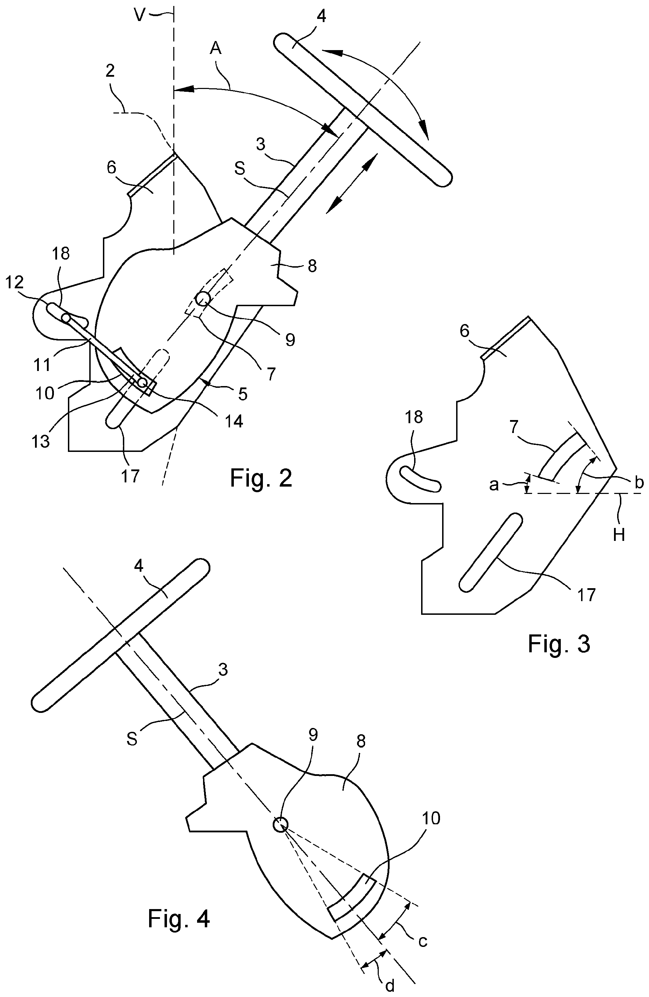

With reference to Figure 2 the steering wheel connection assembly 5 comprises a first guide plate 6 which is rigidly connected to the cabin frame 2. The first guide plate 6 has having a curved vertical guide slot 7 for vertical steering column adjustment and a linear guide slot 17 positioned beneath the curved vertical guide slot 7 when viewed from the steering wheel 4. The first guide plate 6 with its curved vertical guide slot 7 as such is shown in Figure 3.

The steering wheel connection assembly 5 further comprises a second guide plate 8 to which the steering column 3 is rigidly connected to. The second guide plate 8 comprising a cam 9 that engages in the curved vertical guide slot 7 of the first guide plate 6. The second guide plate 8 has a curved angular guide slot 10 for angular steering column adjustment. The second guide plate 8 with the cam 9 and the curved angular guide slot 10 is also shown in side view in Figure 4, although from the other side as shown in Figure 2.

As shown in Figure 2 the steering wheel connection assembly 5 further comprises a second guide plate holding lever system 11. The second guide plate holding lever system 11 as shown in the embodiment of Figure 2 is formed as a rod and has a first end 12 mounted in a displaceable manner in a curved slot 18 for guided movement of the second guide plate holding lever system 11. The second guide plate holding rod 11 has a second free end 13 with a pin 14, which pin 14 engages in both the linear guide slot 17 and the curved angular guide slot 10.

In the shown embodiment the curved vertical guide slot 7 for vertical steering column adjustment has a radius of curvature of between 23 cm and 24 cm and a length of between 14.5 cm and 14.8 cm. With respect to the horizontal H the curved vertical guide slot 7 extends between 17 degrees (a) and 51 degrees (b).

In the shown embodiment the curved angular guide slot 10 for angular steering column adjustment has a radius of curvature of between 13.6 cm and 13.8 cm and a length of between 9.2 cm and 9.4 cm. With respect to the axis S of the steering column the curved angular guide slot 10 extends between 29 degrees (c) and 11 degrees (d).

With the steering wheel connection assembly 5 as shown in Figure 2 an angular adjustment angle A of the steering column measured from the steering column axis S between 8 degrees and 55.5 degrees is obtainable with a compact and relatively simple mechanical construction.

## Claims

1. A driver's cabin (1) of a vehicle, in particular a heavy goods vehicle, the driver's cabin (1) comprising a cabin frame (2), a steering column (3) for a steering wheel (4) and a steering wheel connection assembly (5) connecting the steering wheel (4) to the cabin frame (2), wherein the steering wheel connection assembly (5) comprises:
- a first guide plate (6) rigidly connected to the cabin frame (2), the first guide plate (6) having a curved vertical guide slot (7) for vertical steering column (3) adjustment; wherein the first guide plate (6) further has a linear guide slot (17) positioned beneath the curved vertical guide slot (7) and wherein the steering wheel connection assembly (5) further comprises:
- a second guide plate (8), the steering column (3) being rigidly connected to the second guide plate (8), the second guide plate (8) comprising a cam (9) that engages in the curved vertical guide slot (7), the second guide plate (8) having a curved angular guide slot (10) for angular steering column (3) adjustment;
- a second guide plate holding lever system (11), said second guide plate holding lever system (11) having a first end (12) rotationally connected to the cabin frame (2) or the first guide plate (6), and a second free end (13) having a pin (14), the pin (14) engaging in both the linear guide slot (17) and the curved angular guide slot (10), and wherein the first end (12) of the second guide plate holding lever system (11) is mounted in a displaceable manner in a curved slot (18).

2. A driver's cabin (1) of a vehicle as claimed in claim 1, wherein the curved vertical guide slot (7) for vertical steering column (3) adjustment has a radius of curvature of between 23 cm and 24 cm and a length of between 14.5 cm and 14.8 cm.

3. A driver's cabin (1) of a vehicle as claimed in claim 2, wherein with respect to the horizontal the curved vertical guide slot (7) for vertical steering column (3) adjustment extends between 17 degrees and 51 degrees.

4. A driver's cabin (1) of a vehicle as claimed in claim 1, 2 or 3, wherein the curved angular guide slot (10) for angular steering column (3) adjustment has a radius of curvature of between 13.6 cm and 13.8 cm and a length of between 9.2 cm and 9.4 cm.

5. A driver's cabin (1) of a vehicle as claimed in claim 4, wherein with respect to the axis S of the steering column (3) the curved angular guide slot (10) for angular steering column (3) adjustment extends between 29 and 11 degrees.

6. A driver's cabin (1) of a vehicle as claimed in claim 3 and 5, wherein the steering wheel connection assembly (5) provides an angular adjustment angle of the steering column (3) between 8 degrees and 55.5 degrees.

## Patentansprüche

1. Fahrerkabine (1) eines Fahrzeugs, insbesondere eines Lastkraftwagens, wobei die Fahrerkabine (1) einen Kabinenrahmen (2), eine Lenksäule (3) für ein Lenkrad (4) und eine Lenkradverbindungsbaugruppe (5) umfasst, die das Lenkrad (4) mit dem Kabinenrahmen (2) verbindet, wobei die Lenkradverbindungsbaugruppe (5) Folgendes umfasst:
- eine erste Führungsplatte (6), die starr mit dem Kabinenrahmen (2) verbunden ist, wobei die erste Führungsplatte (6) einen gekrümmten vertikalen Führungsschlitz (7) für die vertikale Einstellung der Lenksäule (3) aufweist; wobei die erste Führungsplatte (6) ferner einen linearen Führungsschlitz (17) aufweist, der unterhalb des gekrümmten vertikalen Führungsschlitzes (7) angeordnet ist, und wobei die Lenkradverbindungsbaugruppe (5) ferner Folgendes umfasst:
- eine zweite Führungsplatte (8), wobei die Lenksäule (3) starr mit der zweiten Führungsplatte (8) verbunden ist, wobei die zweite Führungsplatte (8) einen Nocken (9) umfasst, der in den gekrümmten vertikalen Führungsschlitz (7) eingreift, wobei die zweite Führungsplatte (8) einen gekrümmten Winkelführungsschlitz (10) zur winkelmäßigen Einstellung der Lenksäule (3) aufweist;
- ein zweites Führungsplatten-Haltehebelsystem (11), wobei das besagte zweite Führungsplatten-Haltehebelsystem (11) ein erstes Ende (12), das drehbar mit dem Kabinenrahmen (2) oder der ersten Führungsplatte (6) verbunden ist, und ein zweites freies Ende (13) mit einem Stift (14) aufweist, wobei der Stift (14) sowohl in den linearen Führungsschlitz (17) als auch in den gekrümmten Winkelführungsschlitz (10) eingreift, und wobei das erste Ende (12) des zweiten Führungsplatten-Haltehebelsystems (11) in einem gekrümmten Schlitz (18) verschiebbar angebracht ist.

2. Fahrerkabine (1) eines Fahrzeugs nach Anspruch 1, wobei der gekrümmte vertikale Führungsschlitz (7) für die vertikale Einstellung der Lenksäule (3) einen Krümmungsradius zwischen 23 cm und 24 cm und eine Länge zwischen 14,5 cm und 14,8 cm aufweist.

3. Fahrerkabine (1) eines Fahrzeugs nach Anspruch 2, wobei der gekrümmte vertikale Führungsschlitz (7) zur vertikalen Verstellung der Lenksäule (3) in Bezug auf die Horizontale zwischen 17 Grad und 51 Grad verläuft.

4. Fahrerkabine (1) eines Fahrzeugs nach Anspruch 1, 2 oder 3, wobei der gekrümmte Winkelführungsschlitz (10) zur winkelmäßigen Einstellung der Lenksäule (3) einen Krümmungsradius zwischen 13,6 cm und 13,8 cm und eine Länge zwischen 9,2 cm und 9,4 cm aufweist.

5. Fahrerkabine (1) eines Fahrzeugs nach Anspruch 4, wobei der gekrümmte Winkelführungsschlitz (10) zur winkelmäßigen Einstellung der Lenksäule (3) in Bezug auf die Achse S der Lenksäule (3) zwischen 29 und 11 Grad verläuft.

6. Fahrerkabine (1) eines Fahrzeugs nach Anspruch 3 und 5, wobei die Lenkradverbindungsbaugruppe (5) einen winkelmäßigen Einstellwinkel der Lenksäule (3) zwischen 8 Grad und 55,5 Grad ermöglicht.

## Revendications

1. Cabine de conducteur (1) d'un véhicule, en particulier un véhicule poids lourd, la cabine de conducteur (1) comprenant un cadre de cabine (2), une colonne de direction (3) pour un volant de direction (4) et un ensemble de liaison de volant de direction (5) reliant le volant de direction (4) au cadre de cabine (2), dans laquelle l'ensemble de liaison de volant de direction (5) comprend :
- une première plaque de guidage (6) reliée de manière rigide au cadre de cabine (2), la première plaque de guidage (6) présentant une fente de guidage verticale incurvée (7) pour un ajustement de la colonne de direction verticale (3) ; dans laquelle la première plaque de guidage (6) présente en outre une fente de guidage linéaire (17) positionnée sous la fente de guidage verticale incurvée (7) et dans laquelle l'ensemble de liaison de volant de direction (5) comprend en outre :
- une seconde plaque de guidage (8), la colonne de direction (3) étant reliée de manière rigide à la seconde plaque de guidage (8), la seconde plaque de guidage (8) comprenant une came (9) qui vient en prise dans la fente de guidage verticale incurvée (7), la seconde plaque de guidage (8) présentant une fente de guidage angulaire incurvée (10) pour un ajustement de la colonne de direction angulaire (3) ;
- un système de levier de maintien de seconde plaque de guidage (11), ledit système de levier de maintien de seconde plaque de guidage (11) présentant une première extrémité (12) reliée de manière rotative au cadre de cabine (2) ou à la première plaque de guidage (6), et une seconde extrémité libre (13) présentant une broche (14), la broche (14) venant en prise à la fois dans la fente de guidage linéaire (17) et dans la fente de guidage angulaire incurvée (10), et dans laquelle la première extrémité (12) du système de levier de maintien de seconde plaque de guidage (11) est montée de manière déplaçable dans une fente incurvée (18).

2. Cabine de conducteur (1) d'un véhicule selon la revendication 1, dans laquelle la fente de guidage verticale incurvée (7) pour un ajustement de la colonne de direction verticale (3) présente un rayon de courbure compris entre 23 cm et 24 cm et une longueur comprise entre 14,5 cm et 14,8 cm.

3. Cabine de conducteur (1) d'un véhicule selon la revendication 2, dans laquelle, par rapport à l'horizontale, la fente de guidage verticale incurvée (7) pour un ajustement de la colonne de direction verticale (3) s'étend entre 17 degrés et 51 degrés.

4. Cabine de conducteur (1) d'un véhicule selon la revendication 1, 2 ou 3, dans laquelle la fente de guidage angulaire incurvée (10) pour un ajustement de la colonne de direction angulaire (3) présente un rayon de courbure compris entre 13,6 cm et 13,8 cm, et une longueur comprise entre 9,2 cm et 9,4 cm.

5. Cabine de conducteur (1) d'un véhicule selon la revendication 4, dans laquelle, par rapport à l'axe S de la colonne de direction (3), la fente de guidage angulaire incurvée (10) pour un ajustement de la colonne de direction angulaire (3) s'étend entre 29 et 11 degrés.

6. Cabine de conducteur (1) d'un véhicule selon les revendications 3 et 5, dans laquelle l'ensemble de liaison de volant de direction (5) fournit un angle d'ajustement angulaire de la colonne de direction (3) compris entre 8 degrés et 55,5 degrés.
